# EUROPÄISCHE PATENTANMELDUNG

(11) **EP 1 294 074 A2**
(43) Veröffentlichungstag der Anmeldung: **19.03.2003**
(21) Anmeldenummer: 02018473.5
(22) Anmeldetag: 16.08.2002
(51) Int. Cl.: H02J 17/00

(54) **Magnetfelderzeugungssystem und Anordnung zur drahtlosen Versorgung einer Vielzahl Sensoren und/oder Aktoren**

(30) Priorität: 15.09.2001 DE 10145636; 05.03.2002 DE 10209656
(71) Anmelder: ABB Research Ltd., 8050 Zürich (CH)
(72) Erfinder: Scheible, Guntram,Dr.-Ing., 69493 Hirschberg (DE); Schutz, Jean, Dr.-Ing., 69115 Heidelberg (DE); Oberschmidt, Carsten, 32289 Rödinghausen (DE)
(74) Vertreter: Miller, Toivo

(57) **Zusammenfassung**

Es wird ein Magnetfelderzeugungssystem mit einer zweidimensionalen Wicklungsanordnung mit zwei orthogonal zueinander angeordneten, eine Maschine oder Anlage (4) umschließenden Wicklungen (1, 2) vorgeschlagen, deren Wicklungsachsen (11,12) senkrecht aufeinander stehen und die über zwei Einspeiseschaltungen (8, 9) mit Wechselgrößen versorgt werden. Zur Erzeugung eines zweidimensionalen, rotierenden Magnetfeldes weisen die beiden Wechselgrößen gleiche Frequenz (f₁), ähnliche Stromamplituden und ähnliche Spannungsamplituden auf und sind miteinander synchronisiert und es wird eine Phasenverschiebung von vorzugsweise 90° zwischen der Wechselgröße der ersten Einspeiseschaltung (8) und der Wechselgröße der zweiten Einspeiseschaltung (9) eingestellt.

Des weiteren werden alternative Ausführungsformen zur Erzeugung eines dreidimensionalen Magnetfeldes sowie eine Anordnung zur drahtlosen Versorgung einer Vielzahl Sensoren und/oder Aktoren mit einem Magnetfelderzeugungssystem vorgeschlagen.

## Beschreibung

Die Erfindung bezieht sich auf ein Magnetfelderzeugungssystem gemäß dem Oberbegriff der nebengeordneten Ansprüche 1, 2 und 3 und auf eine Anordnung zur drahtlosen Versorgung einer Vielzahl Sensoren und/oder Aktoren mit einem Magnetfelderzeugungssystem. Die Erfindung kann insbesondere zur Erzeugung eines Magnetfeldes dienen, welches zur Energieeinspeisung von Sensoren und/oder Aktoren aus diesem Magnetfeld dient.

Aus der DE 39 22 556 C3 ist eine Anordnung zur kontaktlosen Energie- und Sensorsignalübertragung mit einem HF-Sender zum Aufbau eines unmodulierten magnetischen Hochfrequenzfeldes über eine Sendespule bekannt, bei der ein Transponder das hochfrequente Magnetfeld über eine Sekundärwicklung aufnimmt und zu seiner Energieversorgung heranzieht. Mit der aus dem magnetischen Feld gewonnenen Versorgungsenergie werden Sensor und Transponder versorgt.

Dabei wird das erzeugte Magnetfeld durch Abschirmungen, wie beispielsweise großflächige Metallplatten oder durch Metallschienen (beispielsweise Rahmenteile) gebildete geschlossene Schleifen stark geschwächt, so daß eine zuverlässige Energieversorgung insbesondere bei sich bewegenden Sensoren/Aktoren nicht befriedigend gesichert ist.

Der Erfindung liegt die Aufgabe zugrunde, ein Magnetfelderzeugungssystem anzugeben, das auch bei ungünstigen Gegebenheiten eine ausreichende Magnetfelderzeugung gewährleistet.

Des weiteren soll eine Anordnung zur drahtlosen Versorgung einer Vielzahl Sensoren und/oder Aktoren mit einem Magnetfelderzeugungssystem angegeben werden.

Diese Aufgabe wird bezüglich des Magnetfelderzeugungssystems alternativ durch die im Anspruch 1, 2 und 3 gekennzeichneten Merkmale gelöst.

Die Aufgabe wird bezüglich der Anordnung zur drahtlosen Versorgung einer Vielzahl Sensoren und/oder Aktoren mit einem Magnetfelderzeugungssystem durch eine Anordnung gelöst,
- wobei die Wicklungen dieser Magnetfelderzeugungseinrichtung jeweils mit Resonanzkondensatoren zu Resonanzkreisen verschaltet sind, welche durch im Resonanzfall betriebene Einspeiseschaltungen versorgt werden und
- wobei die Sensoren und/oder Aktoren jeweils eine dreidimensionale Wicklungsanordnung aufweisen, deren Wicklungen jeweils mit einem Resonanzkondensator zu einem Resonanzkreis verschaltet und mit einem Gleichrichter verbunden sind, wobei die Gleichanschlüsse dieser Gleichrichter zur Versorgung einer Last in Serie oder parallel geschaltet sind.

Die mit der Erfindung erzielbaren Vorteile bestehen insbesondere darin, daß ein rotierendes Magnetfeld erzeugt wird und daß infolge der universellen Ausrichtung dieses rotierenden Magnetfeldes die Auswirkungen von Abschirmungen verhindert, zumindest jedoch stark reduziert werden, welche die Energieaufnahme der Sekundärwicklungen von Sensoren/Aktoren aus dem Magnetfeld stark schwächen.

Das vorgeschlagene Verfahren zur Erzeugung eines rotierenden Magnetfeldes ist insbesondere geeignet für eine in der DE 199 26 799 A1 vorgeschlagene Anordnung zur drahtlosen Versorgung einer Vielzahl Sensoren mit elektrischer Energie unter Einsatz mehrerer von einem mittelfrequenten Oszillator gespeisten Primärwicklungen (Primärspulen, Sendespulen), wobei jeder Sensor mindestens eine zur Energieaufnahme aus einem mittelfrequenten Magnetfeld (Bereich von etwa 15 kHz bis etwa 15 MHz) geeignete Sekundärwicklung (Sekundärspule, Empfangsspule) aufweist. Der Vorteil der universellen Ausrichtung des erzeugten rotierenden Magnetfeldes ist insbesondere bei an beweglichen Maschinenkomponenten montierten Sensoren (Näherungssensoren) bedeutsam.

Das vorgeschlagene Verfahren zur Erzeugung eines rotierenden Magnetfeldes ist des weiteren bestens geeignet für eine in der DE 199 26 562 A1 vorgeschlagene Anordnung zur drahtlosen Versorgung einer Vielzahl Aktoren mit elektrischer Energie, wobei ebenfalls das produzierte Magnetfeld zur Energieübertragung genutzt wird.

Weitere Vorteile sind aus der nachstehenden Beschreibung ersichtlich.

Eine vorteilhafte Ausgestaltungen der Erfindung ist im Unteranspruch gekennzeichnet.

Die Erfindung wird nachstehend anhand der in der Zeichnung dargestellten Ausführungsbeispiele erläutert. Es zeigen:
- Fig.1: eine Anordnung zur Bildung eines zweidimensional rotierenden Magnetfeldes,
- Fig. 2: eine Anordnung zur Bildung eines dreidimensional rotierenden Magnetfeldes,
- Fig. 3, 4, 5: Varianten zur Anordnung gemäß Fig. 2,
- Fig. 6: eine Anordnung zur drahtlosen Versorgung einer Vielzahl Sensoren und/oder Aktoren.

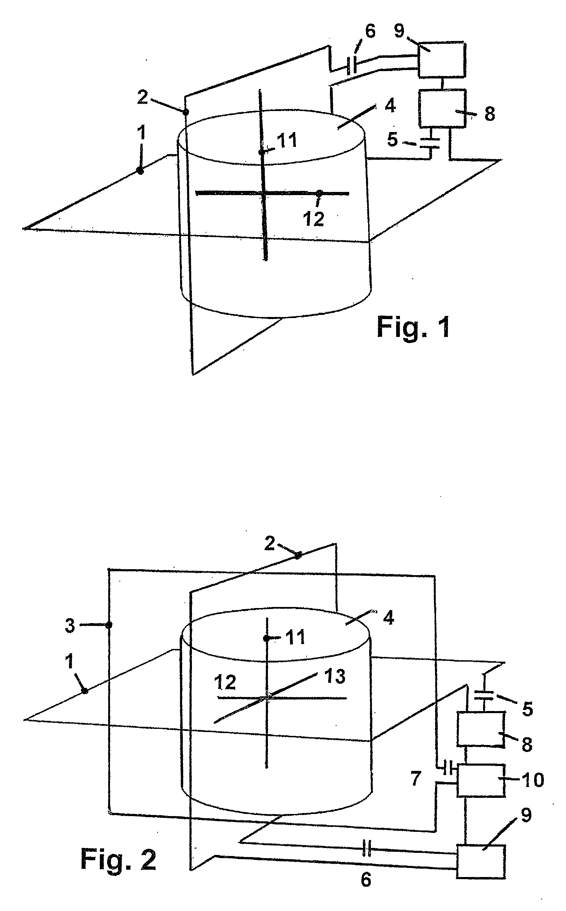

In Fig. 1 ist eine Anordnung zur Bildung eines zweidimensional rotierenden Magnetfeldes dargestellt. Gemäß dieser ersten Ausführungsform wird eine zweidimensionale Wicklungsanordnung mit zwei orthogonal zueinander angeordneten, eine Maschine oder Anlage 4 umschließenden Wicklungen 1, 2 vorgeschlagen, d. h. die Wicklungsachse 11 der ersten Wicklung 1 steht senkrecht auf der Wicklungsachse 12 der zweiten Wicklung 2. Die Wicklungen 1 bzw. 2 sind in der Regel mit Resonanzkondensatoren 5 bzw. 6 zu Resonanzkreisen verschaltet, welche durch (im Resonanzfall betriebene und dadurch) mit minimaler Leistung dimensionierbare Einspeiseschaltungen 8 bzw. 9 versorgt werden. Die von beiden Einspeiseschaltungen 8, 9 gebildeten Wechselgrößen weisen gleiche Frequenz f₁ und in der Regel ähnliche ― vorzugsweise gleiche ― Stromund Spannungsamplituden auf und sind miteinander synchronisiert, wobei eine Phasenverschiebung von vorzugsweise 90° zwischen beiden Wechselgrößen eingestellt wird.

In Fig. 2 ist eine Anordnung zur Bildung eines dreidimensional rotierenden Magnetfeldes dargestellt. Gemäß dieser zweiten Ausführungsform wird eine dreidimensionale Wicklungsanordnung mit drei orthogonal zueinander angeordneten, eine Maschine oder Anlage 4 umschließenden Wicklungen 1, 2, 3 vorgeschlagen, d. h. die Wicklungsachse 11 der ersten Wicklung 1, die Wicklungsachse 12 der zweiten Wicklung 2 und die Wicklungsachse 13 der dritten Wicklung 3 stehen senkrecht aufeinander. Die Wicklungen 1 bzw. 2 bzw. 3 sind mit Resonanzkondensatoren 5 bzw. 6 bzw. 7 zu Resonanzkreisen verschaltet.

Gemäß einer ersten Variante dieser zweiten Ausführungsform werden die Resonanzkreise durch Einspeiseschaltungen 8 bzw. 9 bzw. 10 versorgt. Die von den Einspeiseschaltungen 8, 9, 10 gebildeten Wechselgrößen weisen gleiche Frequenz f₁ und ähnliche ― vorzugsweise gleiche ― Stromamplituden auf und sind miteinander synchronisiert, wobei eine Phasenverschiebung von vorzugsweise 90° zwischen der Wechselgröße der Einspeiseschaltung 8 bzw. der Wicklung 1 einerseits und den Wechselgrößen der Einspeiseschaltungen 9, 10 bzw. der Wicklungen 2, 3 andererseits eingestellt wird. Durch die Einspeiseschaltungen 9, 10 erfolgt eine Amplitudenmodulation des der zweiten und dritten Wicklung 2, 3 eingespeisten Stromes mit einer Frequenz f₂ < f₁.

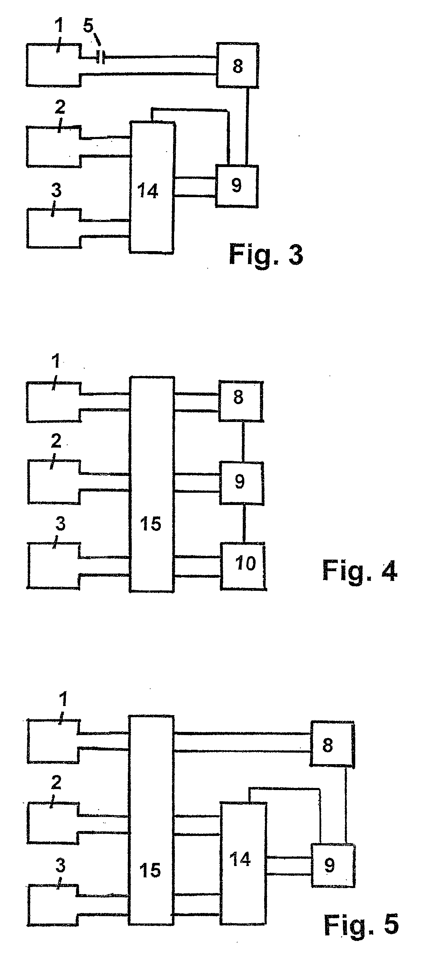

In den Fig. 3, 4 und 5 sind Varianten zur Ausführungsform gemäß Fig. 2 dargestellt. Bei einer in Fig. 3 gezeigten zweiten Variante der zweiten Ausführungsform werden lediglich zwei Einspeiseschaltungen 8, 9 benötigt. Die von den Einspeiseschaltungen 8, 9 gebildeten Wechselgrößen weisen gleiche Frequenz f₁ und ähnliche ― vorzugsweise gleiche ― Strom- und Spannungsamplituden auf und sind miteinander synchronisiert, wobei eine Phasenverschiebung von vorzugsweise 90° zwischen der Wechselgröße der Einspeiseschaltung 8 bzw. der Wicklung 1 einerseits und der Wechselgröße der Einspeiseschaltung 9 andererseits eingestellt wird. Die Einspeiseschaltung 9 speist eine Umschalteinrichtung 14, welche ausgangsseitig mit den Wicklungen 2, 3 beschaltet ist. Die Umschalteinrichtung 14 enthält vorzugsweise die erforderlichen Resonanzkondensatoren und schaltet die von der Einspeiseschaltung 9 gebildete Wechselgröße alternierend jeweils beim Stromnulldurchgang mit der Frequenz f₁ auf die beiden Wicklungen 2, 3.

Bei einer in Fig. 4 gezeigten dritten Variante der zweiten Ausführungsform sind die drei Wicklungen 1, 2, 3 über eine zwischengeschaltete Umschalteinrichtung 15 mit den Einspeiseschaltungen 8, 9, 10 verbunden. Die Umschalteinrichtung 15 enthält vorzugsweise die erforderlichen Resonanzkondensatoren. Es erfolgt eine sukzessive Umschaltung der von den Einspeiseschaltungen 8, 9, 10 gebildeten Wechselgrößen auf die Wicklungen 1, 2, 3 mit einer vorgegebenen Frequenz f₃, wodurch vermieden wird, daß das gebildete rotierende Magnetfeld eine bestimmte Vorzugsrichtung aufweist, d. h. es wird eine symmetrische Verteilung des gebildeten dreidimensionalen Magnetfeldes erzielt.

Bei der in Fig. 5 gezeigten vierten Variante der zweiten Ausführungsform handelt es sich um eine Kombination der unter den Fig. 3 und 4 erläuterten Ausführungsbeispiele, d. h. es ist eine Umschalteinrichtung 15 ― vorzugsweise mit den erforderlichen Resonanzkondensatoren ― vorgesehen, welche ausgangsseitig die drei Wicklungen 1, 2, 3 speist und an welche eingangsseitig die Einspeiseschaltung 8 und die Umschalteinrichtung 14 angeschlossen sind, wobei die Umschalteinrichtung 14 von der Einspeiseschaltung 9 versorgt wird.

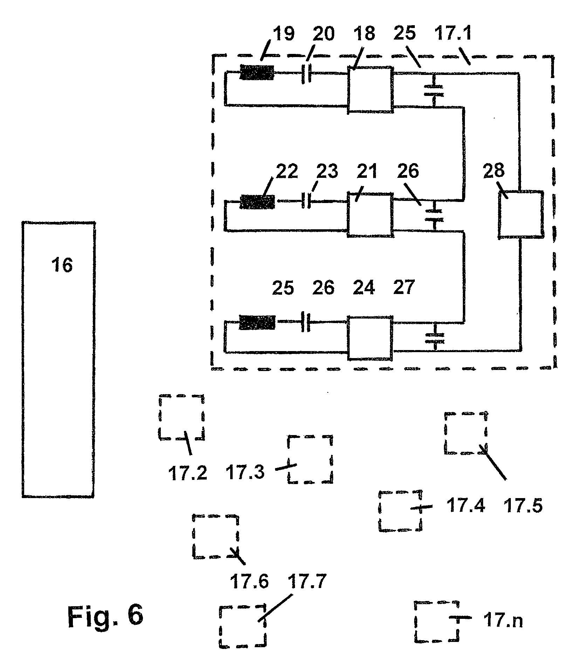

In Fig. 6 ist eine Anordnung zur drahtlosen Versorgung einer Vielzahl Sensoren und/oder Aktoren dargestellt. Es ist eine Magnetfelderzeugungseinrichtung 16 zu erkennen, welche eine zweidimensionale bzw. dreidimensionale Wicklungsanordnung mit zwei bzw. drei orthogonal zueinander angeordneten Wicklungen aufweist (wobei diese Wicklungen mit Resonanzkondensatoren zu Resonanzkreisen verschaltet sind), welche durch Einspeiseschaltungen versorgt werden, um derart ein zweidimensional bzw. dreidimensional rotierendes Magnetfeld zu erzeugen, wie vorstehend erläutert (siehe Ausführungsbeispiele gemäß den vorstehenden Fig. 1 bis 5). Die Magnetfelderzeugungseinrichtung 16 dient zur drahtlosen Versorgung einer Vielzahl Sensoren und/oder Aktoren 17.1, 17.2, 17.3...17.n (n = beliebige ganze positive Zahl) mit elektrischer Energie.

In Fig. 6 ist beispielhaft für einen Sensor oder Aktor 17.1 der Aufbau einer Anordnung zur Erzeugung elektrischer Energie aus dem mittels der Magnetfelderzeugungseinrichtung 16 produzierten Magnetfeld dargestellt. Es ist ein Gleichrichter 18 zu erkennen, dessen Wechselanschlüsse mit einer Serienschaltung einer Wicklung 19 mit einem Resonanzkondensator 20 verbunden ist (Serien-Resonanzkreis). In gleicher Weise liegen an den Wechselanschlüssen eines Gleichrichters 21 die Serienschaltung einer Wicklung 22 mit einem Resonanzkondensator 23 bzw. an den Wechselanschlüssen eines Gleichrichters 24 die Serienschaltung einer Wicklung 25 mit einem Resonanzkondensator 26. Die Wicklungsachsen der drei Wicklungen 19, 22, 25 sind jeweils rechtwinklig zueinander angeordnet und schneiden sich in einem zentralen Punkt eines aus einem magnetisch wirksamen Material aufgebauten Kerns der dreidimensionalen Wicklungsanordnung (selbstverständlich sind alternativ auch Ausführungsvarianten ohne Kern realisierbar).

Die Gleichrichter 18, 21, 24 sind jeweils in Brückenschaltung unter Verwendung von vier Halbleiter-Bauelementen gebildet (Brückengleichrichter). Zwischen den Gleichanschlüssen eines jeden Gleichrichters 18 bzw. 21 bzw. 24 ist ein Stützkondensator 25 bzw. 26 bzw. 27 angeordnet. Die Gleichanschlüsse aller Gleichrichter 18, 21, 24 sind in Serie mit einer Last 28, beispielsweise einer Sensor-Meßeinheit + Sensor-Elektronik oder einer Ansteuereinheit eines Aktors verschaltet.

Selbstverständlich sind bezüglich der Sensoren und/oder Aktoren 17.1...17.n auch andere Ausführungsformen zur Erzeugung elektrischer Energie aus einem Magnetfeld realisierbar, es wird hierzu ausdrücklich auf die in der DE 100 55 404 A1 in den Fig. 4, 5, 6 und 8 erläuterten Varianten hingewiesen, welche Serien-Resonanzkreise, Parallel-Resonanzkreise, in Serie geschaltete Gleichanschlüsse der Gleichrichter, parallel geschaltete Gleichanschlüsse der Gleichrichter und transformatorisch benutzte Wicklungen behandeln.

## Patentansprüche

1. Magnetfelderzeugungssystem mit einer zweidimensionalen Wicklungsanordnung mit zwei im wesentlichen orthogonal zueinander angeordneten, eine Maschine oder Anlage (4) umschließenden Wicklungen (1, 2), deren Wicklungsachsen (11, 12) im wesentlichen senkrecht aufeinander stehen und die über zwei Einspeiseschaltungen (8, 9) mit Wechselgrößen versorgt werden, **dadurch gekennzeichnet,**
- **daß** die beiden Wechselgrößen gleiche Frequenz (f₁), ähnliche Stromamplituden und ähnliche Spannungsamplituden aufweisen und miteinander synchronisiert sind und
- **daß** eine Phasenverschiebung von vorzugsweise 90° zwischen der Wechselgröße der ersten Einspeiseschaltung (8) und der Wechselgröße der zweiten Einspeiseschaltung (9) eingestellt wird.

2. Magnetfelderzeugungssystem mit einer dreidimensionalen Wicklungsanordnung mit drei im wesentlichen orthogonal zueinander angeordneten, eine Maschine oder Anlage (4) umschließenden Wicklungen (1, 2, 3), deren Wicklungsachsen (11, 12, 13) im wesentlichen senkrecht aufeinander stehen und die über drei Einspeiseschaltungen (8, 9, 10) mit Wechselgrößen versorgt werden, **dadurch gekennzeichnet,**
- **daß** alle drei Wechselgrößen eine gleiche erste Frequenz (f₁) und ähnliche Stromamplituden aufweisen und miteinander synchronisiert sind,
- **daß** eine Phasenverschiebung von vorzugsweise 90° zwischen der Wechselgröße der ersten Einspeiseschaltung (8) einerseits und den beiden Wechselgrößen der zweiten und dritten Einspeiseschaltung (9, 10) andererseits eingestellt wird und
- **daß** die Stromamplituden der Wechselgrößen der zweiten und dritten Einspeiseschaltung (9, 10) mit einer zweiten Frequenz (f₂) moduliert werden.

3. Magnetfelderzeugungssystem mit einer dreidimensionalen Wicklungsanordnung mit drei im wesentlichen orthogonal zueinander angeordneten, eine Maschine oder Anlage (4) umschließenden Wicklungen (1, 2, 3), deren Wicklungsachsen (11, 12, 13) im wesentlichen senkrecht aufeinander stehen und die über Einspeiseschaltungen (8, 9) mit Wechselgrößen versorgt werden, **dadurch gekennzeichnet,**
- **daß** lediglich zwei Einspeiseschaltungen (8, 9) zur Versorgung der drei Wicklungen (1, 2, 3) vorgesehen sind,
- **daß** die Wechselgrößen der beiden Einspeiseschaltungen (8, 9) eine gleiche erste Frequenz (f₁) und ähnliche Stromamplituden sowie ähnliche Spannungsamplituden aufweisen und miteinander synchronisiert sind,
- **daß** eine Phasenverschiebung von vorzugsweise 90° zwischen der Wechselgröße der ersten Einspeiseschaltung (8) und der Wechselgröße der zweiten Einspeiseschaltung (9) eingestellt wird und
- **daß** die erste Wicklung (1) mit der Wechselgröße der ersten Einspeiseschaltung (8) beaufschlagt wird, während die Wechselgröße der zweiten Einspeiseschaltung (9) alternierend jeweils beim Stromdurchgang auf die zweite bzw. dritte Wicklung (2, 3) aufgeschaltet wird.

4. Magnetfelderzeugungssystem nach Anspruch 2 oder 3, **dadurch gekennzeichnet, daß** eine sukzessive Umschaltung der Wechselgrößen der Einspeiseschaltungen auf die drei Wicklungen (1, 2, 3) mit einer dritten Frequenz (f₃) erfolgt.

5. Anordnung zur drahtlosen Versorgung einer Vielzahl Sensoren und/oder Aktoren mit einem Magnetfelderzeugungssystem nach einem der vorstehenden Ansprüche,
- wobei die Wicklungen (1, 2, 3) dieser Magnetfelderzeugungseinrichtung (16) jeweils mit Resonanzkondensatoren (5, 6, 7) zu Resonanzkreisen verschaltet sind, welche durch im Resonanzfall betriebene Einspeiseschaltungen (8, 9, 10) versorgt werden und
- wobei die Sensoren und/oder Aktoren (17.1...17.n) jeweils eine dreidimensionale Wicklungsanordnung aufweisen, deren Wicklungen (19, 22, 25) jeweils mit einem Resonanzkondensator (20, 23, 26) zu einem Resonanzkreis verschaltet und mit einem Gleichrichter (18, 21, 24) verbunden sind, wobei die Gleichanschlüsse dieser Gleichrichter zur Versorgung einer Last (28) in Serie oder parallel geschaltet sind.
